# EUROPÄISCHE PATENTSCHRIFT

(11) **EP 3 517 908 B1**
(45) Veröffentlichungstag und Bekanntmachung des Hinweises auf die Patenterteilung: **11.08.2021**
(21) Anmeldenummer: 18207396.5
(22) Anmeldetag: 20.11.2018
(51) Int. Cl.: G01J 3/52

(54) **VERFAHREN ZUR HERSTELLUNG EINER MISCHTONFARBE**
METHOD FOR PRODUCING A MIXED COLOUR PAINT
PROCÉDÉ DE FABRICATION D'UNE COULEUR MÉLANGÉE

(30) Priorität: 29.01.2018 EP 18153954
(43) Veröffentlichungstag der Anmeldung: 31.07.2019
(73) Patentinhaber: Winkler, Thomas, 37339 Kirchworbis (DE)
(72) Erfinder: Winkler, Thomas, 37339 Kirchworbis (DE)
(74) Vertreter: Liedtke & Partner Patentanwälte

(56) Entgegenhaltungen:
- Harald Küppers: "Farbe" In: "Farbe", 1. Januar 1987 (1987-01-01), Callwey Verlag München, XP055493737, Seiten 102-103, * Abbildung 55 * * Seite 103, letzter Absatz *
- Fred Billmeyer ET AL: "Principles of Color Technology" In: "Principles of Color Technology", 1. Januar 1981 (1981-01-01), John Wiley & Sons, XP055493740, Seiten 26-27, * Seite 26, letzter Absatz * * Seite 27; Abbildung 2 *
- Max Lindgren ET AL: "Automatic Color Mixer : A method for automated color recognition and replication", , 1 January 2017 (2017-01-01), XP055727649, Retrieved from the Internet: URL:https://www.diva-portal.org/smash/get/ diva2:1201176/FULLTEXT01.pdf
- SAEIDEH BAKHSHI ET AL: "Red, Purple and Pink: The Colors of Diffusion on Pinterest", PLOS ONE, vol. 10, no. 2, 6 February 2015 (2015-02-06), page e0117148, XP055727657, DOI: 10.1371/journal.pone.0117148

## Beschreibung

Die vorliegende Erfindung betrifft ein Verfahren zur Herstellung einer Mischtonfarbe (M) aus einem Mischtonfarbraum durch Abmischen eines Grundfarbtons (G) mit der Unbuntfarbe Weiß (W) und/oder der Unbuntfarbe Schwarz (S). Die Mischtonfarbe (M) ist aus einem Mischtonfarbraum ausgewählt, der durch ein zweidimensionales kartesisches Koordinatensystem mit den Achsen X und Y dargestellt ist, wobei die Achse X Werte im Bereich von 0 bis 100 und die Achse Y Werte im Bereich von 0 bis 100 aufweist, und wobei die Koordinate (0|0) den Grundfarbton (G) des Mischtonfarbraums, die Koordinate (100|0) die Unbuntfarbe Weiß (W), die Koordinate (0|100) die Unbuntfarbe Schwarz (S) und die Koordinaten (100-u|100-v) die Mischtonfarben aus dem Grundfarbton (G) des Mischtonfarbraums mit der Unbuntfarbe Weiß (W) und/oder der Unbuntfarbe Schwarz (S) darstellen und wobei u Werte im Bereich von größer 0 bis 100 und v Werte im Bereich von größer 0 bis 100 aufweist und wobei wenn u = 100, dann v ≠ 0 und 100 und wenn v = 100, dann u ≠ 0 und 100 gilt. Weiterhin betrifft die vorliegende Erfindung den Mischtonfarbraum umfassend einen Grundfarbton (G), die Unbuntfarbe Weiß (W), die Unbuntfarbe Schwarz (S) und Mischtonfarben aus dem Grundfarbton (G) des Mischtonfarbraums mit der Unbuntfarbe Weiß (W) und/oder der Unbuntfarbe Schwarz (S). Darüber hinaus betrifft sie auch die Verwendung des Mischtonfarbraums zur Auswahl einer Mischtonfarbe (M) zur Gestaltung von Oberflächen.

Die bei der Gestaltung von Oberflächen, insbesondere von Objektoberflächen eines Innenraums und/oder einer Fassade verwendeten Farbtöne, werden meist aus Farbsystemen ausgewählt, in denen die Farbtöne nach ihrem Aussehen möglichst in gleichmäßig-optischen Abständen angeordnet sind.

Unter "Farbtönen" werden im Folgenden Bunttöne verstanden, die gegebenenfalls einen Anteil der Unbuntfarbe Weiß und/oder einen Anteil der Unbuntfarbe Schwarz enthalten. Optisch unterscheiden sich verschiedene Farbtöne lediglich durch ihren Buntton, ihre Helligkeit und ihre Farbsättigung. Grundsätzlich gilt, dass mit steigendem Anteil der Unbuntfarbe Weiß ein Farbton heller wird und dass mit steigendem Anteil der Unbuntfarbe Schwarz ein Farbton dunkler wird. Durch steigende Anteile der Unbuntfarben Weiß und/oder Schwarz wird die Farbsättigung, die ein Maß für die Intensität des Farbtons ist, abgeschwächt.

Da "Farbe" an sich objektiv nicht real existiert, sondern ein Sinneseindruck ist, der durch die Verarbeitung von visuellen Reizen im Gehirn entsteht, gestaltet sich die Erstellung von Farbsystemen im Allgemeinen sehr schwierig. Farbsysteme sind lediglich Versuche, die Farbwahrnehmung zu systematisieren. Auch die Bestimmung der Farbtöne mittels eines Farbmessgeräts hilft üblicherweise nur bedingt weiter, weil die Farbwahrnehmung beim Menschen anders funktioniert. Dies betrifft weniger die Helligkeit der Farbtöne, sondern viel mehr deren Farbsättigung bzw. der Farbtonwahrnehmung in wenig gesättigten Bereichen.

Im Bereich der Helligkeit können die verschiedenen Helligkeitsstufen von Farbtönen von einem Farbmessgerät viel genauer erfasst werden, diese stimmen in der Regel aber mit der Farbwahrnehmung des Menschen weitgehend überein. Anders verhält sich das im Bereich der Farbsättigung. Während das Gerät sicher noch kleinste Farbsättigungsstufen eines Farbtons unterscheiden kann, ist der Mensch dazu physiologisch nicht mehr in der Lage.

Alle Farbsysteme basieren auf der Anordnung von Farben nach Kriterien der visuellen Wahrnehmung. Zur Darstellung eines Farbsystems werden in der Regel die Farbwerte von Farbtönen mittels eines Farbmessgeräts bestimmt und in das Farbsystem eingeordnet. Die Farbtöne müssen jedoch üblicherweise noch empfindungsmäßig korrigiert werden und bleiben damit, egal welcher Referenzgruppe man sich dabei bedient, weitgehend subjektiv in der Darstellung.

Bei einem Farbraum handelt es sich um die Anordnung von Farben, die nach visuellen Kriterien (Farbeigenschaften: Farbton, Sättigung, Helligkeit) ausgerichtet werden. Die mengenmäßige Zusammensetzung bleibt bei der Anordnung unberücksichtigt.

Für die Darstellung der Farbsysteme bedient man sich üblicherweise sogenannter Farbtonkarten, die die Farbtöne möglichst realistisch wiedergeben sollen und die in der Regel auf farbtongleichen Dreiecken basieren. Ein solches farbtongleiches Dreick ist beispielsweise der bekannte Ostwaldfarbraum (siehe z.B. Fred Billmeyer ET AL: "Principles of Color Technology"In: "Principles of Color Technology", 1. Januar 1981 (1981-01-01), John Wiley & Sons,Seiten 26-27).

Da jede Abmischung eines Bunttons mit einem anderen Buntton einen unharmonischen Mischton erzeugen würde, existiert üblicherweise für jeden Buntton ein farbtongleiches Dreieck, das die Mischtonfarben aus dem Buntton mit der Unbuntfarbe Weiß und/oder der Unbuntfarbe Schwarz darstellt. Das farbtongleiche Dreieck ist dabei folgendermaßen aufgebaut:
Die drei Spitzen des farbtongleichen Dreiecks stellen jeweils den Buntton, die Unbuntfarbe Weiß und die Unbuntfarbe Schwarz dar. Die dem Buntton gegenüberliegende Seite stellt die Unbuntreihe (Graureihe) dar, die bei der Unbuntfarbe Weiß beginnt und mit der Unbuntfarbe Schwarz endet. Die Unbuntreihe (Graureihe) enthält neben der Unbuntfarbe Weiß und der Unbuntfarbe Schwarz verschiedene Mischungen aus der Unbuntfarbe Weiß und der Unbuntfarbe Schwarz.

Sie ist nach gefühlsmäßiger Gleichabständigkeit geordnet. Diese Ordnung wird für die Bunttöne übernommen:
Die der Unbuntfarbe Schwarz gegenüberliegende Seite stellt die hellklare Reihe dar, die bei der Unbuntfarbe Weiß beginnt und bei dem Buntton endet. Die hellklare Reihe enthält neben der Unbuntfarbe Weiß und dem Buntton verschiedene Mischtonfarben aus dem Buntton und der Unbuntfarbe Weiß. Die der Unbuntfarbe Weiß gegenüberliegende Seite stellt die dunkelklare Reihe dar, die bei dem Buntton beginnt und bei der Unbuntfarbe Schwarz endet. Die dunkelklare Reihe enthält neben der Unbuntfarbe Schwarz und dem Buntton verschiedene Mischtonfarben aus dem Buntton und der Unbuntfarbe Schwarz.

Zwischen der Unbuntreihe, der hellklaren Reihe und der dunkelklaren Reihe (also im Inneren des farbtongleichen Dreiecks) liegen die Mischtonfarben, die einen Buntton, die Unbuntfarbe Weiß sowie die Unbuntfarbe Schwarz enthalten und im Folgenden auch als trübe Farben bezeichnet werden.

Das Nachmischen von Farbtönen ist eines der größten Probleme in der Anwendungstechnik. Versucht man die optisch ausgerichteten Farbwerte in einem farbtongleichen Dreieck nachzumischen, stellt man sehr schnell fest, dass die optisch regelmäßigen Abstände hinsichtlich Helligkeit und Sättigung sich nicht durch entsprechende Mengen- oder Volumenanteile an den Unbuntfarben Schwarz und/oder Weiß darstellen lassen.

Das Aussehen einer Farbe (Optik) und deren Mengenverhältnisse (physikalisch messbare Grundgrößen der Masse) verändern sich beim Ausmischen nicht in gleicher Weise.

Durch Ausmischen unterschiedlicher Farben entstehen Mischungen dieser, die Mischreihen. Diese sind begrifflich zu unterscheiden von Mischtönen, die nach einer genau festgelegten Rezeptur (Mengenanteilen) gemischt werden hinsichtlich Anteil Grundfarbton, Weiß und Schwarz und zur Unterscheidung zu den Mischungen und Mischreihen fortan als Mischtöne und Mischtonreihen bezeichnet werden.

Um beispielsweise eine gewünschte Mischtonfarbe nachzumischen, die aus einem Buntton und den Unbuntfarben Weiß und Schwarz besteht, muss man wie folgt vorgehen:
Zuerst mischt man die Mischtonfarbe der hellklaren Reihe nach, die senkrecht über der gewünschten Mischtonfarbe steht (Schritt 1). Dann mischt man die Mischtonfarbe der dunkelklaren Reihe nach, die senkrecht unter der gewünschten Mischtonfarbe steht (Schritt 2). Dann mischt man in die Mischtonfarbe der hellklaren Reihe (Ergebnis von Schritt 1) die Mischtonfarbe der dunkelklaren Reihe (Ergebnis von Schritt 2), bis man die gewünschte Mischtonfarbe erhält (Schritt 3).

Dieses Verfahren ist sehr umständlich, da mindestens drei Mischungsschritte notwendig sind, bis der gewünschte Farbton aus dem Buntton sowie der Unbuntfarbe Weiß und der Unbuntfarbe Schwarz erreicht ist. In Schritt 3 werden zwei Mischungen erneut gemischt, wodurch das Ergebnis dieser Mischung kaum noch vorhersagbar wird und so gut wie nicht mehr nachmischbar ist, da sich jede noch so geringe Abweichung in den Schritten 1 und 2 potenziert in Schritt 3 auswirkt.

Des Weiteren sind die im Farbsystem enthaltenen Mischtonfarben der hellklaren Reihe, der dunkelklaren Reihe und der trüben Farben sowie die Mischungen der Graureihe nicht durch entsprechende mengenmäßige Anteile an Weiß, Schwarz und Buntton erreichbar.

Das Erstellen von Farbtonkarten, die entsprechend dem farbtongleichen Dreieck angeordnet sind, ist deshalb sehr aufwendig. Ohne Angabe der mengenmäßigen Bestandteile (Buntton, Schwarz, Weiß) sind die dargestellten Mischtonfarben praktisch nicht mehr nachmischbar.

Versucht man es dennoch, diese nachzumischen, wird der gewünschte Farbton nur in den seltensten Fällen erreicht. Der Aufwand an Zeit und die Unmenge an übrig bleibenden vermischten Mischtonfarben sind dabei extrem hoch. Die dabei vermischten Mischtonfarben sind praktisch kaum noch nutzbar, der materielle Verlust ist entsprechend hoch und zudem müssen diese auch noch teuer entsorgt werden.

Es besteht daher ein Bedarf an einem Verfahren zur Herstellung einer Mischtonfarbe, das die zuvor beschriebenen Nachteile nicht oder in vermindertem Maße aufweist.

Die der vorliegenden Erfindung zugrundeliegende objektive technische Aufgabe ist somit die Bereitstellung eines Verfahrens zur Herstellung einer Mischtonfarbe, das die vorstehend beschriebenen Nachteile nicht oder in vermindertem Maße aufweist.

Gelöst wird diese Aufgabe durch ein Verfahren zur Herstellung einer Mischtonfarbe (M) durch Abmischen
eines Grundfarbtons (G) mit
der Unbuntfarbe Weiß (W) und/oder
der Unbuntfarbe Schwarz (S),
dadurch gekennzeichnet, dass die Mischtonfarbe (M) aus einem Mischtonfarbraum ausgewählt ist und der Mischtonfarbraum durch ein zweidimensionales kartesisches Koordinatensystem mit den Achsen X und Y dargestellt ist, wobei die Achse X Werte im Bereich von 0 bis 100 und die Achse Y Werte im Bereich von 0 bis 100 aufweist, die Koordinate (010) den Grundfarbton (G) des Mischtonfarbraums, die Koordinate (100|0) die Unbuntfarbe Weiß (W), die Koordinate (0 | 100) die Unbuntfarbe Schwarz (S) und die Koordinaten (100-u | 100-v), die Mischtonfarben aus dem Grundfarbton (G) des Mischtonfarbraums mit der Unbuntfarbe Weiß (W) und/oder der Unbuntfarbe Schwarz (S) darstellen, wobei u Werte im Bereich von größer 0 bis 100 und v Werte im Bereich von größer 0 bis 100 aufweist, wobei gilt, wenn u = 100, dann v ≠ 0 und 100 und wenn v = 100, dann u ≠ 0 und 100, und wobei
i) wenn v = 100 und u ≠ 100 gilt,
   der Term (u*100)/100) dem prozentualen Anteil des Grundfarbtons (G) und der Term ((100-u)*100)/100 dem prozentualen Anteil der Unbuntfarbe Weiß (W)
   entspricht, bezogen auf die Summe der Anteile an (G) und (W),
   oder
ii) wenn u = 100 und v ≠ 100 gilt,
   der Term (v*100)/100 dem prozentualen Anteil des Grundfarbtons (G) und der Term ((100-v)*100)/100 dem prozentualen Anteil der Unbuntfarbe Schwarz (S)
   entspricht, bezogen auf die Summe der Anteile an (G) und (S),
   oder
iii) wenn u ≠ 100 und v ≠ 100 gilt,
   der Term (u*v/100) dem prozentualen Anteil des Grundfarbtons (G),
   der Term ((100-u)*v/100) dem prozentualen Anteil der Unbuntfarbe Weiß (W) und
   der Term (100-v) dem prozentualen Anteil der Unbuntfarbe Schwarz (S)
   entspricht, bezogen auf die Summe der Anteile an (G), (W) und (S),
umfassend die Schritte
a1) Auswahl einer Mischtonfarbe (M) aus den Mischtonfarben mit den Koordinaten (100-u |0), wobei u ≠ 0 und 100 gilt, und
b1) Abmischen der Unbuntfarbe Weiß (W) mit dem Grundfarbton (G) des Mischtonfarbraums, bis die gewählte Mischtonfarbe (M) aus Schritt a1) erreicht ist,
oder
a2) Auswahl einer Mischtonfarbe (M) aus den Mischtonfarben mit den Koordinaten (0| 100-v), wobei v ≠ 0 und 100 gilt, und
b2) Abmischen des Grundfarbtons (G) des Mischtonfarbraums mit der Unbuntfarbe Schwarz (S), bis die gewählte Mischtonfarbe (M) aus Schritt a2) erreicht ist,
oder
a3) Auswahl einer Mischtonfarbe (M) aus den Mischtonfarben mit den Koordinaten (100-u | 100-v), wobei u ≠ 100 und v ≠ 100 gilt,
b3) Abmischen der Unbuntfarbe Weiß (W) mit dem Grundfarbton (G) des Mischtonfarbraums, bis die Mischtonfarbe mit der Koordinate (100-u | 0) erreicht ist, und
c3) Abmischen der Mischtonfarbe Schritt b3) mit der Koordinate (100-u | 0) mit der Unbuntfarbe Schwarz (S), bis die gewählte Mischtonfarbe (M) aus Schritt a3) erreicht ist.

Die Herstellung einer Mischtonfarbe ist ein Verfahren, das sich bereits bekannter Techniken bedient. Die Abmischung aller möglichen Farben ergibt den Mischtonfarbraum, der aus mischtongleichen Flächen besteht. Auch der Mischfarbraum muss zur Visualisierung - wie das bei anderen Farbsystemen auch der Fall ist - ausgemischt werden. Da der Farbanteil in festgelegten Schritten erfolgt, können alle Farbreihen aus sich heraus entwickelt werden. Durch Abwiegen der Restfarbe einer Mischung kann rechnerisch ermittelt werden, wie viel von Weiß oder Schwarz oder Farbe zugegeben werden muss, um den nächsten Mischton zu mischen. Der Mischtonfarbraum, der in der Patentschrift beschrieben wird, setzt grundsätzlich die Berechnung der Farbwerte voraus. Diese ergeben sich aus definierten X und Y-Werten, die im Vorfeld festzulegen sind. Dann muss jeder der Farbtöne des Mischtonfarbraums exakt nach den Mengenanteilen gemischt werden.

Die innenliegenden Farbreihen im farbtongleichen Dreieck (Weißreihe, Schwarzreihe, Hellgleiche, Schwarzgleiche und Reingleiche) unterscheiden sich grundsätzlich von den Farbreihen im Mischtondreieck (den horizontal und vertikal angeordneten Mischtönen).

Daraus ergibt sich:
a. ein Mischtonrechteck kann nicht aus einem farbtongleichen Dreieck umgesetzt werden.
b. Ein Mischtonrechteck kann nicht durch systematisches Ausmischen einer Farbe entstehen.
c. Die Mischtöne und deren Anordnung im Mischtondreieck unterscheiden sich grundlegend vom farbtongleichen Dreieck.

Das bedeutet, ein farbtongleiches Dreieck kann nie ein Mischtonrechteck sein.

Das erfindungsgemäße Verfahren vereinfacht durch die Verwendung des erfindungsgemäßen Mischtonfarbraums, beispielsweise in Form von Farbtonkarten oder in Form von Farbkatalogen für Gestaltungsprogramme, die Herstellung einer Mischtonfarbe (M), die einen Grundfarbton (G), insbesondere einen Buntton, sowie die Unbuntfarben Weiß (W) und/oder Schwarz (S) enthält, erheblich.

Da in dem erfindungsgemäßen Mischtonfarbraum die Mischtonfarben im Gegensatz zum farbtongleichen Dreieck systematisch nach ihrer prozentualen Zusammensetzung angeordnet sind, kann durch die Verwendung des erfindungsgemäßen Mischtonfarbraums die gewünschte Mischtonfarbe (M) sehr genau nachgemischt werden und es ergibt sich wenig beziehungsweise gar keine Diskrepanz zwischen der gewählten Mischtonfarbe (M) im Mischtonfarbraum und der nachgemischten Mischtonfarbe (M) aus dem Grundfarbton (G) sowie den Unbuntfarben Weiß (W) und/oder Schwarz (S).

Wenig beziehungsweise gar keine Diskrepanz zwischen der gewählten Mischtonfarbe (M) im Mischtonfarbraum und der nachgemischten Mischtonfarbe (M) aus dem Grundfarbton (G) sowie den Unbuntfarben Weiß (W) und/oder Schwarz (S) ergibt sich selbst dann, wenn die vorzugsweise in Form eines farbmittelbasierten Anstrichstoffs, Beschichtungsstoffs oder Lacks vorliegenden Mischtonfarben Verunreinigungen oder produktionsbedingte minimale Zusammensetzungsunterschiede aufweisen.

Beim Nachmischen der Mischtonfarbe (M) kann zudem sehr viel Zeit eingespart werden, da im Vergleich zum Nachmischen mittels farbtongleichem Dreieck ein Mischungsschritt entfällt. Bei Verwendung des erfindungsgemäßen Mischtonfarbraums sind bei der Herstellung einer Mischtonfarbe (M), die einen Grundfarbton (G), insbesondere einen Buntton, sowie die Unbuntfarben Weiß (W) und Schwarz (S) enthält, lediglich zwei Mischungsschritte von Nöten: Erst die Ausmischung der Unbuntfarbe Weiß (W) zum Grundfarbton (G) (Schritt b3)i)), dann die Ausmischung der ersten Ausmischung zur Unbuntfarbe Schwarz (S) (Schritt b3)ii)).

Ein weiterer Vorteil stellt das vereinfachte Mischen in Bezug auf die Helligkeit der Mischtonfarben dar: Beispielsweise wird beim Mischen einer gewählten Mischtonfarbe (M), die einen Grundfarbton (G), insbesondere einen Buntton, sowie die Unbuntfarben Weiß (W) und Schwarz (S) enthält, im ersten Mischungsschritt durch Zumischen des Grundfarbtons (G) zur Unbuntfarbe Weiß (W) die Mischtonfarbe dunkler (Schritt b3)i)), im zweiten Mischungsschritt wird die Mischtonfarbe durch das Zumischen der Unbuntfarbe Schwarz (S) nochmals dunkler (Schritt b3)ii)). Dadurch kann sich während des Mischens der gewünschten Mischtonfarbe (M) an der Helligkeit orientiert werden, die photometrisch überprüfbar ist und die auch der Farbwahrnehmung des Menschen entspricht. Das erleichtert den Mischprozess und macht ihn zudem technisch überprüfbar.

Ein weiterer Vorteil des erfindungsgemäßen Mischtonfarbraums liegt darin, dass der Aufwand bei der Erstellung von Farbtonkarten, insbesondere die computer- und drucktechnische Umsetzung, erheblich geringer ist als beispielsweise der Aufwand bei der Erstellung von Farbtonkarten, die auf dem farbtongleichen Dreieck basieren, da die Mischtonfarben systematisch nach ihrer prozentualen Zusammensetzung angeordnet sind und ein empfindungsmäßiges Ausrichten oder Korrigieren der erhaltenen Mischtonfarben nicht erforderlich ist.

Des Weiteren ist es vorteilhaft, dass man Mischtonfarbräume, die verschiedene Grundfarbtöne (G), insbesondere verschiedene Bunttöne, enthalten, besser miteinander vergleichen kann. Alle Mischtonfarben, die den gleichen "x"-Wert, also den gleichen (100-u)-Wert, aufweisen, enthalten gleich viele Teile der Nichtfarbe Weiß; alle Mischtonfarben, die den gleichen "y"-Wert, also den gleichen (100-v)-Wert, aufweisen, enthalten gleich viele Teile der Nichtfarbe Schwarz. Dies ermöglicht es, bei der Auswahl einer Mischtonfarbe (M) die Veränderung des Grundfarbtons (G) bei Zumischen der Unbuntfarben Weiß (W) und/oder Schwarz (S) zu beurteilen und Mischtonfarben, die verschiedene Grundfarbtöne (G) enthalten, miteinander zu vergleichen, wobei auch kleine Unterschiede zwischen den Mischtonfarben wahrgenommen werden können.

Der erfindungsgemäße Mischtonfarbraum vereinfacht weiterhin das Auffinden zueinander passender Mischtonfarben, die den gleichen Grundfarbton (G) aufweisen (monochrome Farben), in Bereichen wie der Innenraum-, Fassaden- oder Fahrzeuggestaltung, da die Mischtonfarben nach oben hin dunkler und nach unten hin zunehmend heller werden sowie nach rechts hin zunehmend heller und nach links hin zunehmend dunkler.

Darüber hinaus ist es möglich, die Mischtonfarben im erfindungsgemäßen Mischtonfarbraum zweckdienlich anzuordnen. Das heißt Mischtonfarben, die für eine spezielle Anwendung nicht benötigt werden, können im Koordinatensystem entsprechend ausgelassen werden.

Durch das Weglassen nicht benötigter Mischtonfarben verringert sich die Anzahl der darzustellenden Mischtonfarben und damit der finanzielle Aufwand beispielsweise bei der Erstellung von Farbtonkarten.

Beispielsweise hat der erfindungsgemäße Mischtonfarbraum, in dem Fall, dass alle Mischtonfarben angezeigt werden, die Form eines Rechteckes. Dieses Rechteck wird im Folgenden auch als Mischtonrechteck bezeichnet. Teilt man das Mischtonrechteck von oben links nach unten rechts diagonal in zwei Dreiecke und vergleicht die Mischtonfarben der beiden Dreiecke miteinander, stellt man fest, dass das unten links liegende Dreieck viele brauchbare beziehungsweise anwendbare Mischtonfarben enthält, während das oben rechts liegende Dreieck weniger unterscheidbare und damit weniger brauchbare Mischtonfarben enthält. Für viele Anwendungen können im Zuge der Vereinfachung und der Zeitersparnis die Mischtonfarben aus dem oberen Dreieck deshalb weggelassen werden. Das untere linke Dreieck wird im Folgenden auch als Mischtondreieck bezeichnet.

Durch die Anordnung der Mischtonfarben in Reihen und Spalten und das Weglassen der weniger attraktiven Mischtonfarben entsteht zwar ein Mischtondreieck, das dem farbtongleichen Dreieck optisch sehr nahe kommt, doch das erfindungsgemäße Mischtondreieck hat eine völlig neue Qualität, weil jeweils alle darin enthaltenen Mischtonfarben in einer Spalte den prozentual gleichen Anteil Weiß und alle darin enthaltenen Mischtonfarben in einer Reihe den prozentual gleichen Anteil Schwarz aufweisen.

Im Rahmen der vorliegenden Erfindung wird unter dem Begriff "Mischtonfarbe (M)" eine Mischung verstanden, die einen Grundfarbton (G) und mindestens eine Unbuntfarbe enthält. Unbuntfarben im Sinne der vorliegenden Erfindung sind Farben, die keinen Buntton enthalten, vorzugsweise Weiß und Schwarz.

Unter einem Grundfarbton (G) wird im Rahmen der vorliegenden Erfindung eine Farbe verstanden, die einen Buntton enthält, vorzugsweise ist der Grundfarbton (G) ein Buntton. Bunttöne im Sinne der vorliegenden Anmeldung sind Primärfarben, Sekundärfarben und Tertiärfarben sowie Mischungen aus verschiedenen Primär-, Sekundär- und Tertiärfarben.

Die Primärfarben sind Rot, Gelb und Blau. Die Sekundärfarben sind Orange, Grün und Violett, sie können aus den Primärfarben gemischt werden. Die Tertiärfarben sind die größte Gruppe und enthalten Mischungen aus Rot und Orange zu Rotorange, Gelb und Orange zu Gelborange, Gelb und Grün zu Gelbgrün, Blau und Grün zu Blaugrün, Blau und Violett zu Blauviolett und Rot und Violett zu Rotviolett, also Mischungen aus Primär- und Sekundärfarben. Sie enthalten die Brauntöne wie Umbra und Ocker.

Nachfolgend wird das erfindungsgemäße Verfahren näher erläutert.

Die Mischtonfarbe (M) wird durch Abmischen
eines Grundfarbtons (G) mit
der Unbuntfarbe Weiß (W) und/oder
der Unbuntfarbe Schwarz (S)
hergestellt.

Vorzugsweise wird die Mischtonfarbe (M) durch Abmischen
eines Bunttons mit
der Unbuntfarbe Weiß (W) und/oder
der Unbuntfarbe Schwarz (S)
hergestellt.

Gegenstand der vorliegenden Erfindung ist somit auch ein Verfahren zur Herstellung einer Mischtonfarbe (M), bei dem der Grundfarbton (G) ein Buntton ist.

Die Mischtonfarbe (M) ist aus einem Mischtonfarbraum ausgewählt. Der Mischtonfarbraum ist durch ein zweidimensionales kartesisches Koordinatensystem mit den Achsen X und Y dargestellt. Die Achse X weist Werte im Bereich von 0 bis 100 und die Achse Y Werte im Bereich von 0 bis 100 auf.

Dabei ist die Achse X vorzugsweise die horizontale Achse, die Achse Y ist vorzugsweise die vertikale Achse. Es ist aber auch möglich, dass die Achse X die vertikale Achse und die Achse Y die horizontale Achse darstellt.

Vorzugsweise zeigt die Achse X nach rechts, sie kann aber auch beispielsweise nach unten, nach oben oder nach links zeigen.

Die Achse Y zeigt vorzugsweise nach oben, sie kann aber beispielsweise auch nach unten, nach rechts oder nach links zeigen.

Die Achse X bzw. die Achse Y kann eine beliebige Anzahl von Werten aufweisen. Dabei ist es möglich, dass die Achse X und die Achse Y die gleiche Anzahl von Werten aufweisen. Es ist aber auch möglich, dass die Achse X eine höhere Anzahl von Werten aufweist als die Achse Y oder umgekehrt.

Vorzugsweise weist die Achse X eine Anzahl von mindestens 3 Werten auf, mehr bevorzugt von mindestens 5 Werten, insbesondere bevorzugt von mindestens 7 Werten.

Gegenstand der vorliegenden Erfindung ist somit auch ein Verfahren zur Herstellung einer Mischtonfarbe (M), bei dem die Achse X eine Anzahl von mindestens 3 Werten aufweist.

Vorzugsweise weist die Achse Y eine Anzahl von mindestens 3 Werten auf, mehr bevorzugt von mindestens 5 Werten, insbesondere bevorzugt von mindestens 7 Werten.

Gegenstand der vorliegenden Erfindung ist somit auch ein Verfahren zur Herstellung einer Mischtonfarbe (M), bei dem die Achse Y eine Anzahl von mindestens 3 Werten aufweist.

Weiterhin weist die Achse X vorzugsweise eine angemessene Anzahl an Werten auf, die dem Verwendungszweck und dessen Umsetzung nicht entgegensteht.

Gegenstand der vorliegenden Erfindung ist somit auch ein Verfahren zur Herstellung einer Mischtonfarbe (M), bei dem die Achse X eine angemessene Anzahl an Werten aufweist, die dem Verwendungszweck und dessen Umsetzung nicht entgegensteht.

Die Achse Y weist vorzugsweise ebenfalls eine angemessene Anzahl an Werten auf, die dem Verwendungszweck und dessen Umsetzung nicht entgegensteht.

Gegenstand der vorliegenden Erfindung ist somit auch ein Verfahren zur Herstellung einer Mischtonfarbe (M), bei dem die Achse Y eine angemessene Anzahl an Werten aufweist, die dem Verwendungszweck und dessen Umsetzung nicht entgegensteht.

Unter dem Begriff "angemessene Anzahl an Werten, die dem Verwendungszweck und dessen Umsetzung nicht entgegensteht" wird im Rahmen der vorliegenden Anmeldung Folgendes verstanden:
Die Anzahl der Werte richtet sich nach der Anwendung:
Wird beispielsweise nur eine Mischtonfarbe (M) mit einem bestimmten Grundfarbton (G) benötigt, weist die Achse X bzw. die Achse Y vorzugsweise eine Anzahl von höchstens 10 Werten auf, mehr bevorzugt von höchstens 7 Werten, insbesondere bevorzugt von höchstens 5 Werten.

Werden beispielsweise mehrere voneinander verschiedene Mischtonfarben (M) mit dem gleichen Grundfarbton (G) benötigt, wird vorzugsweise eine höhere Anzahl von Werten benötigt; hier weist die Achse X bzw. die Achse Y bevorzugt eine Anzahl von höchstens 12 Werten auf, mehr bevorzugt von höchstens 10 Werten, insbesondere bevorzugt von höchstens 7 Werten.

Im Fall, dass eine sehr helle Mischtonfarbe (M) benötigt wird, weist die Achse X vorzugsweise eine höhere Anzahl von Werten auf als die Achse Y.

Im entgegengesetzten Fall, dass eine sehr dunkle Mischtonfarbe (M) benötigt wird, weist die Achse Y vorzugsweise eine höhere Anzahl von Werten auf als die Achse X.

Weiterhin kann die Achse X ganzzahlige und/oder gebrochenzahlige Werte aufweisen.

Gegenstand der vorliegenden Erfindung ist somit auch ein Verfahren zur Herstellung einer Mischtonfarbe (M), bei dem die Achse X ganzzahlige und/oder gebrochenzahlige Werte aufweist.

Die Achse Y kann ebenfalls ganzzahlige und/oder gebrochenzahlige Werte aufweisen.

Gegenstand der vorliegenden Erfindung ist somit auch ein Verfahren zur Herstellung einer Mischtonfarbe (M), bei dem die Achse Y ganzzahlige und/oder gebrochenzahlige Werte aufweist.

Beispiele für ganzzahlige Werte sind die Werte 1, 2, 3 oder 4. Beispiele für gebrochenzahlige Werte sind die Werte 1,4 oder 10,8.

Die Achse X weist vorzugsweise Werte auf, die
i) den gleichen Abstand oder
ii) einen ungleichen Abstand
haben.

Gegenstand der vorliegenden Erfindung ist somit auch ein Verfahren zur Herstellung einer Mischtonfarbe (M), bei dem die Achse X Werte aufweist, die
i) den gleichen Abstand oder
ii) einen ungleichen Abstand
haben.

Die Achse Y weist ebenfalls vorzugsweise Werte auf, die
i) den gleichen Abstand oder
ii) einen ungleichen Abstand
haben.

Gegenstand der vorliegenden Erfindung ist somit auch ein Verfahren zur Herstellung einer Mischtonfarbe (M), bei dem die Achse Y Werte aufweist, die
i) den gleichen Abstand oder
ii) einen ungleichen Abstand
haben.

Dabei ist es möglich, dass die Achse X Werte aufweist, die den gleichen Abstand haben und die Achse Y Werte aufweist, die einen ungleichen Abstand haben. Es ist aber auch möglich, dass die Achse Y Werte aufweist, die den gleichen Abstand haben und die Achse X Werte aufweist, die einen ungleichen Abstand haben.

Beispiele für Werte, die einen gleichen Abstand haben, sind die Werte 10, 20, 30 und 40. Hier beträgt der jeweilige Abstand 10. Beispiele für Werte, die einen ungleichen Abstand haben, sind die Werte 1, 3, 51 und 70. Hier betragen die Abstände 2, 48 und 19.

Im erfindungsgemäßen Verfahren stellt die Koordinate (0|0) den Grundfarbton (G) des Mischtonfarbraums, die Koordinate (100|0) die Unbuntfarbe Weiß (W), die Koordinate (0|100) die Unbuntfarbe Schwarz (S) und die Koordinaten (100-u|100-v) die Mischtonfarben aus dem Grundfarbton (G) des Mischtonfarbraums mit der Unbuntfarbe Weiß (W) und/oder der Unbuntfarbe Schwarz (S) dar. u weist dabei Werte im Bereich von größer 0 bis 100 und v Werte im Bereich von größer 0 bis 100 auf, wobei gilt, wenn u = 100, dann v ≠ 0 und 100 und wenn v = 100, dann u ≠ 0 und 100.

Im Rahmen der vorliegenden Erfindung stellt der Wert vor dem Strich | der Koordinaten den Wert der Achse X ("x"-Wert oder Abszisse), der Wert hinter dem Strich | der Koordinaten den Wert der Achse Y ("y"-Wert oder Ordinate) dar. Beispielsweise stellt der Wert "0" bei der Koordinate (0|100) den "x"-Wert, der Wert "100" den "y"-Wert dar. Bei den Koordinaten (100-u|100-v) stellt der Wert "100-u" den "x"-Wert, der Wert ^{"}100-v" den "y"-Wert dar.

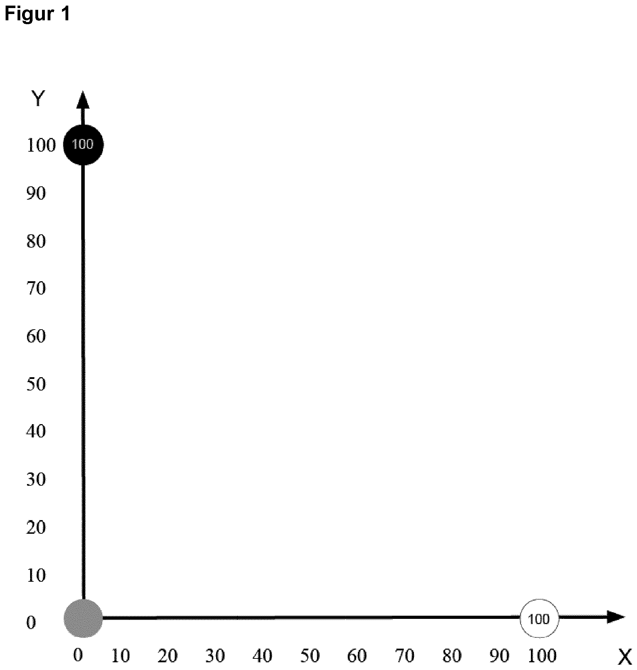

In Figur 1 ist ein zweidimensionales kartesisches Koordinatensystem mit den Achsen X und Y dargestellt. Die Achse X weist Werte im Bereich von 0 bis 100 und die Achse Y weist Werte im Bereich von 0 bis 100 auf. Die Koordinate (0|0) stellt den Grundfarbton (G) des Mischtonfarbraums, die Koordinate (100|0) die Unbuntfarbe Weiß (W) und die Koordinate (0|100) die Unbuntfarbe Schwarz (S) dar. Die Achse X und die Achse Y weisen die gleiche Anzahl von ganzzahligen Werten auf, die den gleichen Abstand haben.

Wenn
i) v = 100 und u ≠ 100 gilt, entspricht
   der Term (u*100)/100 dem prozentualen Anteil des Grundfarbtons (G) und
   der Term ((100-u)*100)/100 dem prozentualen Anteil der Unbuntfarbe Weiß (W),
   bezogen auf die Summe der Anteile an (G) und (W).

Die Summe der prozentualen Anteile an (G) und (W) addiert sich im Allgemeinen zu 100 %.

Die Mischtonfarbe mit der Koordinate (301 0) enthält beispielsweise einen prozentualen Anteil des Grundfarbtons (G) von 70,00 % und einen prozentualen Anteil der Unbuntfarbe Weiß (W) von 30,00 %, die sich zu 100 % addieren.
Berechnung u: 100-X = u: 100-30 = 70
Berechnung Term (u*100)/100: (70*100)/100 = 70
Berechnung Term ((100-u)*100)/100: ((100-70)*100)/100 = 30

Wenn
ii) u = 100 und v ≠ 100 gilt, entspricht
der Term (v*100)/100 dem prozentualen Anteil des Grundfarbtons (G) und
der Term ((100-v)*100)/100 dem prozentualen Anteil der Unbuntfarbe Schwarz (S),
bezogen auf die Summe der Anteile an (G) und (S).

Die Summe der prozentualen Anteile an (G) und (S) addiert sich im Allgemeinen zu 100 %.

Die Mischtonfarbe mit der Koordinate (0|10) enthält beispielsweise einen prozentualen Anteil des Grundfarbtons (G) von 90,00 % und einen prozentualen Anteil der Unbuntfarbe Schwarz (S) von 10,00 %, die sich zu 100 % addieren.
Berechnung v = 100-Y: 100-10 = 90
Berechnung Term (v*100)/100: (90*100)/100 = 90
Berechnung Term ((100-v)*100)/100: ((100-90)*100)/100 = 10

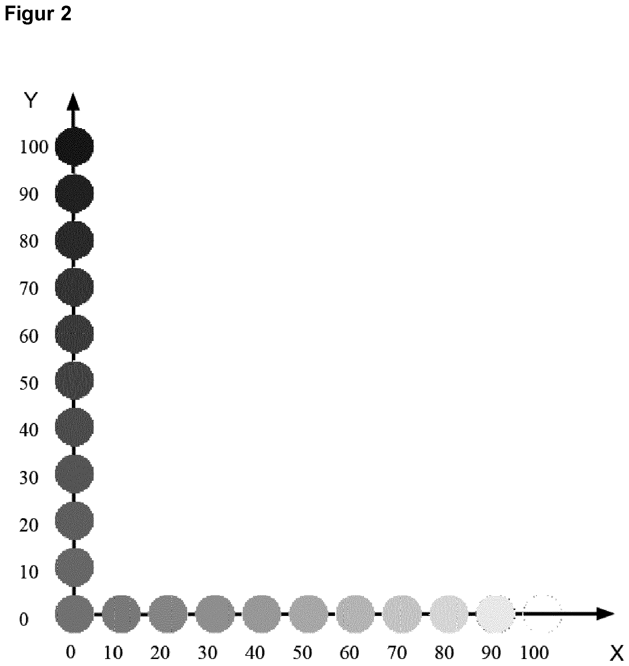

In Figur 2 ist ein zweidimensionales kartesisches Koordinatensystem mit den Achsen X und Y abgebildet, das Mischtonfarben aus dem Grundfarbton (G) des Mischtonfarbraums und der Unbuntfarbe Weiß (W) sowie Mischtonfarben aus dem Grundfarbton (G) des Mischtonfarbraums und der Unbuntfarbe Schwarz (S) darstellt. Die Achse X weist Werte im Bereich von 0 bis 100 und die Achse Y weist Werte im Bereich von 0 bis 100 auf. Die Koordinate (010) stellt den Grundfarbton (G) des Mischtonfarbraums, die Koordinate (100|0) die Unbuntfarbe Weiß (W) und die Koordinate (0|100) die Unbuntfarbe Schwarz (S) dar. Die Achse X und die Achse Y weisen die gleiche Anzahl von ganzzahligen Werten auf, die den gleichen Abstand haben. Die Koordinaten (100-u|0) stellen die Mischtonfarben aus dem Grundfarbton (G) mit der Unbuntfarbe Weiß (W), die Koordinaten (0|100-v) stellen die Mischtonfarben aus dem Grundfarbton (G) mit der Unbuntfarbe Schwarz (S) dar. Die Mischtonfarbe mit der Koordinate (30|0) enthält beispielsweise einen prozentualen Anteil des Grundfarbtons (G) von 70 % und einen prozentualen Anteil der Unbuntfarbe Weiß (W) von 30 %, bezogen auf die Summe der Anteile an (G) und (W). Die Mischtonfarbe mit der Koordinate (0|70) enthält beispielsweise einen prozentualen Anteil des Grundfarbtons (G) von 30 % und einen prozentualen Anteil der Unbuntfarbe Schwarz (S) von 70 %, bezogen auf die Summe der Anteile an (G) und (S).

Wenn
iii) u ≠ 100 und v ≠ 100 gilt, entspricht
der Term (u*v/100) dem prozentualen Anteil des Grundfarbtons (G),
der Term ((100-u)*v/100) dem prozentualen Anteil der Unbuntfarbe Weiß (W) und
der Term (100-v) dem prozentualen Anteil der Unbuntfarbe Schwarz (S),
bezogen auf die Summe der Anteile an (G), (W) und (S).

Die Summe der prozentualen Anteile an (G), (W) und (S) addiert sich im Allgemeinen zu 100 %.

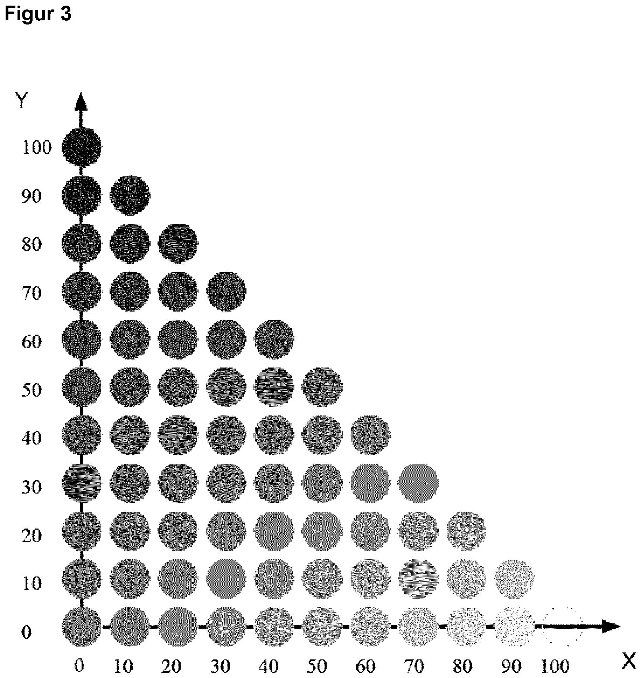

In Figur 3 ist ein erfindungsgemäßer Mischtonfarbraum abgebildet, der mittels eines zweidimensionalen kartesischen Koordinatensystems mit den Achsen X und Y dargestellt ist. Die Achse X weist Werte im Bereich von 0 bis 100 und die Achse Y weist Werte im Bereich von 0 bis 100 auf. Die Koordinate (0|0) stellt den Grundfarbton (G) des Mischtonfarbraums, die Koordinate (100|0) die Unbuntfarbe Weiß (W) und die Koordinate (0|100) die Unbuntfarbe Schwarz (S) dar. Die Achse X und die Achse Y weisen die gleiche Anzahl von ganzzahligen Werten auf, die den gleichen Abstand haben. Die Koordinaten (100-u|0) stellen die Mischtonfarben aus dem Grundfarbton (G) mit der Unbuntfarbe Weiß (W), die Koordinaten (0|100-v) stellen die Mischtonfarben aus dem Grundfarbton (G) mit der Unbuntfarbe Schwarz (S) dar. Die Koordinaten (100-u|100-v) stellen Mischtonfarben aus dem Grundfarbton (G) des Mischtonfarbraums mit der Unbuntfarbe Weiß (W) und/oder der Unbuntfarbe Schwarz (S) dar, wobei u Werte im Bereich von größer 0 bis kleiner 100 und v Werte im Bereich von größer 0 bis kleiner 100 aufweist. Für 100-u = 10 sind beispielsweise 10 Mischtonfarben dargestellt, für 100-u = 60 sind beispielsweise 5 Mischtonfarben dargestellt. Die Mischtonfarbe mit der Koordinate (30|10) enthält beispielsweise einen prozentualen Anteil des Grundfarbtons (G) von 63,00 %, einen prozentualen Anteil der Unbuntfarbe Weiß (W) von 27,00 % und einen prozentualen Anteil der Unbuntfarbe Schwarz (S) von 10,00 %, bezogen auf die Summe der Anteile an (G), (W) und (S). Bei dem Mischtonfarbraum handelt es sich um ein Mischtondreieck.

Die Mischtonfarbe mit der Koordinate (30|10) enthält also einen prozentualen Anteil des Grundfarbtons (G) von 63,00 %, einen prozentualen Anteil der Unbuntfarbe Weiß (W) von 27,00 % und einen prozentualen Anteil der Unbuntfarbe Schwarz (S) von 10,00 %, die sich zu 100 % addieren.
Berechnung u = 100-X: 100-30 = 70
Berechnung v = 100-Y: 100-10 = 90
Berechnung Term (u*v/100): 70*90/100 = 63 (Anteil Grundfarbton (G))
Berechnung Term ((100-u)*v/100): (100-70)*90/100= 27 (Anteil Unbuntfarbe Weiß (W))
Berechnung Term (100-v): 100-90= 10 (Anteil Unbuntfarbe Schwarz (S))

Dennoch basiert auch das Mischtondreieck auf dem Mischtonrechteck. Nur sind hier wenig benötigte Farbtöne nicht dargestellt.

Die Farben im farbtongleichen Dreieck und in einem Mischtonrechteck können niemals identisch sein, weder formal noch vom Farbton. Die Farben im farbtongleichen Dreieck können nicht auf den Mischtonfarbraum übertragen werden. Die Farben im Mischtonrechteck können nicht auf den Farbraum des farbtongleichen Dreiecks übertragen werden.

Das erfindungsgemäße Verfahren kann folgende Schritte umfassen:
a1) Auswahl einer Mischtonfarbe (M) aus den Mischtonfarben mit den Koordinaten (100-u |0), wobei u ≠ 0 und 100 gilt, und
b1) Abmischen der Unbuntfarbe Weiß (W) mit dem Grundfarbton (G) des Mischtonfarbraums bis die gewählte Mischtonfarbe (M) aus Schritt a1) erreicht ist,
oder
a2) Auswahl einer Mischtonfarbe (M) aus den Mischtonfarben mit den Koordinaten (0|100-v), wobei v ≠ 0 und 100 gilt, und
b2) Abmischen des Grundfarbtons (G) des Mischtonfarbraums mit der Unbuntfarbe Schwarz (S) bis die gewählte Mischtonfarbe (M) aus Schritt a2) erreicht ist,
oder
a3) Auswahl einer Mischtonfarbe (M) aus den Mischtonfarben mit den Koordinaten (100-u | 100-v), wobei u ≠ 100 und v ≠ 100 gilt,
b3) Abmischen der Unbuntfarbe Weiß (W) mit dem Grundfarbton (G) des Mischtonfarbraums, bis die Mischtonfarbe mit der Koordinate (100-u |0) erreicht ist, und
c3) Abmischen der Mischtonfarbe aus Schritt b3) mit der Koordinate (100-u |0) mit der Unbuntfarbe Schwarz (S), bis die gewählte Mischtonfarbe (M) aus Schritt a3) erreicht ist.

Die Anteile an (G), (W) und/oder (S) können Gewichtsanteile oder Volumenanteile sein. Vorzugsweise sind die Anteile an (G), (W) und/oder (S) Gewichtsanteile.

Gegenstand der vorliegenden Erfindung ist somit auch ein Verfahren zur Herstellung einer Mischtonfarbe (M), bei dem die Anteile an (G), (W) und/oder (S) Gewichtsanteile oder Volumenanteile sind.

Der Grundfarbton (G) des Mischtonfarbraums, die Unbuntfarbe Weiß (W), die Unbuntfarbe Schwarz (S) und die Mischtonfarbe (M) können in Form eines farbmittelbasierten Anstrichstoffs, Beschichtungsstoffs oder Lacks vorliegen.

Gegenstand der vorliegenden Erfindung ist somit auch ein Verfahren zur Herstellung einer Mischtonfarbe (M), bei dem der Grundfarbton (G) des Mischtonfarbraums, die Unbuntfarbe Weiß (W), die Unbuntfarbe Schwarz (S) und die Mischtonfarbe (M) in Form eines farbmittelbasierten Anstrichstoffs, Beschichtungsstoffs oder Lacks vorliegen.

Der Begriff "farbmittelbasiert" bedeutet im Rahmen der vorliegenden Erfindung, dass der Anstrichstoff, Beschichtungsstoff oder Lack mindestens einen Farbstoff oder mindestens ein Pigment enthält. Als weitere Komponenten kann der Anstrichstoff, Beschichtungsstoff oder Lack während des Mischens und bis die Trocknung eingetreten ist, mindestens ein organisches Löse- und/oder Verdünnungsmittel und/oder Wasser enthalten. Weiterhin kann der Anstrichstoff, Beschichtungsstoff oder Lack auch verschiedene Additive enthalten.

Prinzipiell können der Grundfarbton (G) des Mischtonfarbraums, die Unbuntfarbe Weiß (W), die Unbuntfarbe Schwarz (S) und die Mischtonfarbe (M) in Form jedes beliebigen farbmittelbasierten Anstrichstoffs, Beschichtungsstoffs oder Lacks vorliegen. Beispiele für geeignete Anstrichstoffe, Beschichtungsstoffe oder Lacke, die im Rahmen der vorliegenden Erfindung verwendet werden, sind Anstrichstoffe, Beschichtungsstoffe oder Lacke der Firma CAPAROL Farben Lacke Bautenschutz GmbH. Besonders geeignet für die Umsetzung sind die Maler-Farben dieser Firma.

Der Grundfarbton (G) des Mischtonfarbraums, die Unbuntfarbe Weiß (W), die Unbuntfarbe Schwarz (S) und die Mischtonfarben aus dem Mischtonfarbraum können mittels eines Farbmessgeräts bestimmt werden.

Beispielsweise werden der Grundfarbton (G) des Mischtonfarbraums, die Unbuntfarbe Weiß (W), die Unbuntfarbe Schwarz (S) und die Mischtonfarben aus dem Mischtonfarbraum mittels eines Farbmessgeräts CA-2500 der Firma KONICA MINOLTA bestimmt.

Gegenstand der vorliegenden Erfindung ist somit auch ein Verfahren zur Herstellung einer Mischtonfarbe (M), bei dem der Grundfarbton (G) des Mischtonfarbraums, die Unbuntfarbe Weiß (W), die Unbuntfarbe Schwarz (S) und die Mischtonfarben aus dem Mischtonfarbraum mittels eines Farbmessgeräts bestimmt werden.

Gegenstand der vorliegenden Erfindung ist auch der Mischtonfarbraum umfassend einen Grundfarbton (G), die Unbuntfarbe Weiß (W), die Unbuntfarbe Schwarz (S) und Mischtonfarben aus dem Grundfarbton (G) des Mischtonfarbraums mit der Unbuntfarbe Weiß (W) und/oder der Unbuntfarbe Schwarz (S), dadurch gekennzeichnet, dass der Mischtonfarbraum durch ein zweidimensionales kartesisches Koordinatensystem mit den Achsen X und Y dargestellt ist, wobei die Achse X Werte im Bereich von 0 bis 100 und die Achse Y Werte im Bereich von 0 bis 100 aufweist, die Koordinate (0 |0) den Grundfarbton (G) des Mischtonfarbraums, die Koordinate (100|0) die Unbuntfarbe Weiß (W), die Koordinate (0 |100) die Unbuntfarbe Schwarz (S) und die Koordinaten (100-u | 100-v) die Mischtonfarben aus dem Grundfarbton (G) des Mischtonfarbraums mit der Unbuntfarbe Weiß (W) und/oder der Unbuntfarbe Schwarz (S) darstellen, wobei u Werte im Bereich von größer 0 bis 100 und v Werte im Bereich von größer 0 bis 100 aufweist, wobei gilt, wenn u = 100, dann v ≠ 100 und wenn v = 100, dann u ≠ 100, und wobei
i) wenn v = 100 und u ≠ 100 gilt,
   der Term (u*100)/100 dem prozentualen Anteil des Grundfarbtons (G) und
   der Term ((100-u)*100)/100 dem prozentualen Anteil der Unbuntfarbe Weiß (W)
   entspricht, bezogen auf die Summe der Anteile an (G) und (W), oder
ii) wenn u = 100 und v ≠ 100 gilt,
   der Term (v*100)/100 dem prozentualen Anteil des Grundfarbtons (G) und
   der Term ((100-v)*100)/100 dem prozentualen Anteil der Unbuntfarbe Schwarz (S)
   entspricht, bezogen auf die Summe der Anteile an (G) und (S), oder
iii) wenn u ≠ 100 und v ≠ 100 gilt,
   der Term (u*v/100) dem prozentualen Anteil des Grundfarbtons (G),
   der Term ((100-u)*v/100) dem prozentualen Anteil der Unbuntfarbe Weiß (W) und
   der Term (100-v) dem prozentualen Anteil der Unbuntfarbe Schwarz (S)
   entspricht, bezogen auf die Summe der Anteile an (G), (W) und (S).

In einer weiteren Ausführungsform der vorliegenden Erfindung kann der erfindungsgemäße Mischtonfarbraum zusätzlich eine weitere Achse Y2 aufweisen, die Werte w im Bereich von 0 bis 100 aufweist.

Die weitere Achse Y2 liegt vorzugsweise parallel zur Achse Y und zeigt vorzugsweise nach oben. Im Fall, dass die Achse Y nach unten oder nach rechts zeigt, kann die Achse Y2 selbstverständlich auch nach unten oder nach rechts zeigen.

Der Wert 0 der Achse Y2 beginnt bei dem Wert 100 der Achse X. Der Wert w = 0 stellt die Unbuntfarbe Weiß (W) dar, der Wert w = 100 die Unbuntfarbe Schwarz (S) und die Werte 0 < w < 100 stellen Mischungen der Unbuntfarbe Weiß (W) mit der Unbuntfarbe Schwarz (S) dar, wobei
der Term ((100-w)*100)/100 dem prozentualen Anteil der Unbuntfarbe Weiß (W) und der Term (w*100)/100 dem prozentualen Anteil der Unbuntfarbe Schwarz (S)
entspricht, bezogen auf die Summe der Anteile an (W) und (S).

Die Mischungen der Unbuntfarbe Weiß (W) mit der Unbuntfarbe Schwarz (S) können ebenfalls mittels eines Farbmessgeräts bestimmt werden.

In einer weiteren Ausführungsform der vorliegenden Erfindung kann der erfindungsgemäße Mischtonfarbraum zusätzlich die Koordinaten (100-u|100) aufweisen, die alle die Unbuntfarbe Schwarz (S) darstellen. Die Koordinaten (100-u|100) werden im Folgenden auch als Schwarzreihe bezeichnet.

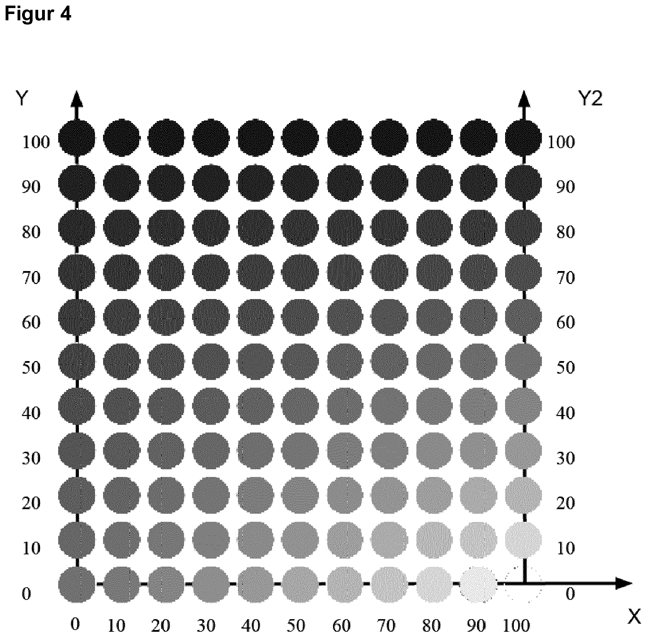

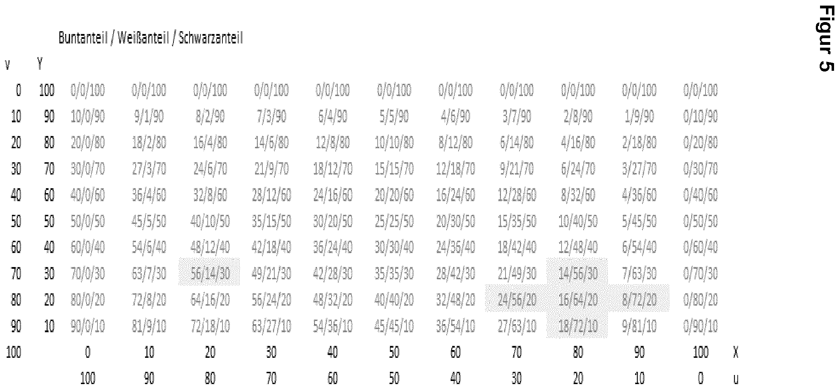

In Figur 4 ist ein erfindungsgemäßer Mischtonfarbraum abgebildet, der mittels eines zweidimensionalen kartesischen Koordinatensystems mit den Achsen X und Y und der zusätzlichen Achse Y2 dargestellt ist. Die Achsen X, Y und Y2 weisen jeweils Werte im Bereich von 0 bis 100 auf. Die Koordinate (010) stellt den Grundfarbton (G) des Mischtonfarbraums, die Koordinate (100|0) die Unbuntfarbe Weiß (W) und die Koordinate (0|100) die Unbuntfarbe Schwarz (S) dar. Die Achsen X, Y und Y2 weisen die gleiche Anzahl von ganzzahligen Werten auf, die den gleichen Abstand haben. Die Koordinaten (100-u|0) stellen die Mischtonfarben aus dem Grundfarbton (G) mit der Unbuntfarbe Weiß (W), die Koordinaten (0|100-v) stellen die Mischtonfarben aus dem Grundfarbton (G) mit der Unbuntfarbe Schwarz (S) dar. Die Werte w, die auf der Achse Y2 liegen, stellen Mischungen der Unbuntfarbe Weiß (W) mit der Unbuntfarbe Schwarz (S) dar. Der Wert w = 100 stellt die Unbuntfarbe Schwarz (S) dar, der Wert w = 0 die Unbuntfarbe Weiß (W). Die Werte (100-u|100) stellen ebenfalls die Unbuntfarbe Schwarz (S) dar (Schwarzreihe). Die Mischung mit dem Wert w = 40 enthält beispielsweise einen prozentualen Anteil der Unbuntfarbe Weiß (W) von 60 % und einen prozentualen Anteil der Unbuntfarbe Schwarz (S) von 40 %, bezogen auf die Summe der Anteile an (W) und (S). Bei dem Mischtonfarbraum handelt es sich um ein Mischtonrechteck.

Der Mischtonfarbraum besteht ausschließlich aus berechenbaren Werten, die bei der visualisierten Umsetzung durch Ausmischen optisch nicht korrigiert werden müssen. Allein darin besteht ein grundlegender Unterschied zum farbtongleichen Dreieck, bei dem die Farbwerte optisch ausgerichtet werden und deshalb mengenmäßig zwangsläufig unregelmäßig sein müssen.

Der Mischtonfarbraum setzt grundsätzlich die Berechnung der Farbwerte voraus. Diese ergeben sich aus definierten X und Y- Werten, die im Vorfeld festzulegen sind. Dann muss jeder der Farbtöne des Mischtonfarbraums exakt nach den Mengenanteilen gemischt werden.

Der erfindungsgemäße Mischtonfarbraum wird vorzugsweise zur Auswahl einer Mischtonfarbe (M) zur Gestaltung von Oberflächen verwendet. Dabei handelt es sich vorzugsweise um Objektoberflächen. Bei den Objekten kann es sich um beliebige Objekte handeln, beispielsweise um Wände, Böden, Decken oder Möbel. Die Objektoberflächen können sich im Innenbereich oder im Außenbereich befinden, vorzugsweise handelt es sich um Objektoberflächen eines Innenraums und/oder einer Fassade.

Gegenstand der vorliegenden Erfindung ist demnach auch die Verwendung des Mischtonfarbraums zur Auswahl einer Mischtonfarbe (M) zur Gestaltung von Oberflächen, vorzugsweise von Objektoberflächen, insbesondere von Objektoberflächen eines Innenraums und/oder einer Fassade.

Der erfindungsgemäße Mischtonfarbraum kann jedoch auch zur Auswahl einer Mischtonfarbe (M) für andere Zwecke dienen, beispielsweise für die Einfärbung von Textilien oder Lebensmitteln.

Die folgenden Beispiele sollen die vorliegende Erfindung weiter verdeutlichen, ohne aber die vorliegende Erfindung darauf zu beschränken.

### Beispiele V1 und E1

### V1 (Vergleichsbeispiel):

Folgender Versuch wird 20-mal durchgeführt:
Eine Mischtonfarbe aus einem Buntton, der Unbuntfarbe Weiß und der Unbuntfarbe Schwarz wird aus den abgebildeten Mischtonfarben eines farbtongleichen Dreiecks ausgewählt und nachgemischt.

In jedem der 20 Versuche gibt es eine deutliche Diskrepanz zwischen der ausgewählten abgebildeten Mischtonfarbe des farbtongleichen Dreiecks und der nachgemischten Mischtonfarbe aus der Buntfarbe mit der Unbuntfarbe Weiß und der Unbuntfarbe Schwarz. Außerdem sind nach dem Mischen noch große Mengen an Mischtonfarbe aus der Buntfarbe und der Unbuntfarbe Weiß (hellklare Reihe) und an Mischtonfarbe aus der Buntfarbe und der Unbuntfarbe Schwarz (dunkelklare Reihe) übrig, die nicht genutzt werden können. Ein Wiederholen des Mischergebnisses ist sehr schwierig und aufwendig und führt dazu, dass noch größere Mengen an Mischtonfarbe übrig bleiben.

### E1 (Erfindungsgemäßes Beispiel):

Folgender Versuch wird 20-mal durchgeführt:
Eine Mischtonfarbe aus einem Buntton, der Unbuntfarbe Weiß und der Unbuntfarbe Schwarz wird aus den abgebildeten Mischtonfarben eines erfindungsgemäßen Mischtonfarbraums ausgewählt und nachgemischt.

In jedem der 20 Versuche gibt es gar keine bzw. eine geringe Diskrepanz zwischen der ausgewählten abgebildeten Mischtonfarbe des erfindungsgemäßen Mischtonfarbraums und der nachgemischten Mischtonfarbe aus der Buntfarbe mit der Unbuntfarbe Weiß und der Unbuntfarbe Schwarz. Für das Nachmischen wird deutlich weniger Zeit benötigt als in Beispiel V1. Auch bleiben keine Mengen an Mischtonfarben übrig, da der Buntton, die Unbuntfarbe Weiß und die Unbuntfarbe Schwarz in einem Gefäß gemischt werden und die benötigten Mengen vorher berechnet werden. Ein Wiederholen des Mischergebnisses ist deshalb ebenfalls möglich.

Ein weiterer Vorteil ist hier auch bei der Auswahl der Mischtonfarbe zu sehen: Durch ihre systematische Anordnung im Mischtonfarbraum, wird für die Auswahl der Mischtonfarbe deutlich weniger Zeit benötigt als in Beispiel V1.

### Beispiele V2 und E2

### V2 (Vergleichsbeispiel):

Ein Kunde wünscht die Gestaltung seiner Wohnzimmerwand mittels Schabloniertechnik und engagiert einen Malermeister. Der Malermeister zeigt ihm die Farbtonkarte eines Herstellers, die auf dem farbtongleichen Dreieck basiert und auf der verschiedene Mischtonfarben abgebildet sind. Der Kunde sucht sich drei Mischtonfarben A, B und C aus. Zur Gestaltung der Wohnzimmerwand werden von den jeweiligen Mischtonfarben folgende Mengen benötigt:

| | |
|---|---|
| Mischtonfarbe A: | 80 g |
| Mischtonfarbe B: | 120 g |
| Mischtonfarbe C: | 60 g |

Die gewählten Mischtonfarben müssen beim Hersteller bestellt oder bestenfalls bei einem Farbhändler mit einer Mischanlage gemischt werden. Da das Mischen der Mischtonfarben in der Mischanlage nur ab einer bestimmten zu mischenden Mindestmenge funktioniert, die im günstigsten Fall derzeitig 300 g beträgt, bezahlt der Malermeister/Kunde für das Mischen und erhält jeweils 300 g Mischtonfarbe A, 300 g Mischtonfarbe B und 300 g Mischtonfarbe C, wovon nur ein Bruchteil benötigt wird.

### E2 (Erfindungsgemäßes Beispiel):

Ein Kunde wünscht die Gestaltung seiner Wohnzimmerwand mittels Schabloniertechnik und engagiert einen Malermeister. Der Malermeister zeigt ihm die Farbtonkarte eines Herstellers, die auf dem erfindungsgemäßen Mischtonfarbraum basiert und auf der verschiedene Mischtonfarben abgebildet sind. Der Kunde sucht sich drei Mischtonfarben A, B und C aus. Zur Gestaltung der Wohnzimmerwand werden von den jeweiligen Mischtonfarben folgende Mengen benötigt:

| | |
|---|---|
| Mischtonfarbe A: | 80 g |
| Mischtonfarbe B: | 120 g |
| Mischtonfarbe C: | 60 g |

Die gewählten Mischtonfarben können in nur wenigen Minuten in der gewünschten Menge aus dem Grundfarbton (G) des Mischtonfarbraums mit der Unbuntfarbe Weiß (W) und/oder der Unbuntfarbe Schwarz (S) selbst vor Ort abgemischt werden.

## Patentansprüche

1. Verfahren zur Herstellung einer Mischtonfarbe (M) durch Abmischen
eines Grundfarbtons (G) mit
der Unbuntfarbe Weiß (W) und/oder
der Unbuntfarbe Schwarz (S),
**dadurch gekennzeichnet, dass** die Mischtonfarbe (M) aus einem Mischtonfarbraum ausgewählt ist und der Mischtonfarbraum durch ein zweidimensionales kartesisches Koordinatensystem mit den Achsen X und Y dargestellt ist, wobei die Achse X Werte im Bereich von 0 bis 100 und die Achse Y Werte im Bereich von 0 bis 100 aufweist, die Koordinate (0 |0) den Grundfarbton (G) des Mischtonfarbraums, die Koordinate (100|0) die Unbuntfarbe Weiß (W), die Koordinate (0|100) die Unbuntfarbe Schwarz (S) und die Koordinaten (100-u | 100-v) die Mischtonfarben aus dem Grundfarbton (G) des Mischtonfarbraums mit der Unbuntfarbe Weiß (W) und/oder der Unbuntfarbe Schwarz (S) darstellen, wobei u Werte im Bereich von größer 0 bis 100 und v Werte im Bereich von größer 0 bis 100 aufweist, wobei gilt, wenn u = 100, dann v ≠ 0 und 100 und wenn v = 100, dann u ≠ 0 und 100, und wobei
i) wenn v = 100 und u ≠ 100 gilt,
der Term (u*100)/100 dem prozentualen Anteil des Grundfarbtons (G) und
der Term ((100-u)*100)/100 dem prozentualen Anteil der Unbuntfarbe Weiß (W)
entspricht, bezogen auf die Summe der Anteile an (G) und (W), oder
ii) wenn u = 100 und v ≠ 100 gilt,
der Term (v*100)/100 dem prozentualen Anteil des Grundfarbtons (G) und
der Term ((100-v)*100)/100 dem prozentualen Anteil der Unbuntfarbe Schwarz (S)
entspricht, bezogen auf die Summe der Anteile an (G) und (S), oder
iii) wenn u ≠ 100 und v ≠ 100 gilt,
der Term (u*v/100) dem prozentualen Anteil des Grundfarbtons (G),
der Term ((100-u)*v/100) dem prozentualen Anteil der Unbuntfarbe Weiß (W) und
der Term (100-v) dem prozentualen Anteil der Unbuntfarbe Schwarz (S)
entspricht, bezogen auf die Summe der Anteile an (G), (W) und (S),
umfassend die Schritte
a1) Auswahl einer Mischtonfarbe (M) aus den Mischtonfarben mit den Koordinaten (100-u |0), wobei u ≠ 0 und 100 gilt, und
b1) Abmischen der Unbuntfarbe Weiß (W) mit dem Grundfarbton (G) des Mischtonfarbraums bis die gewählte Mischtonfarbe (M) aus Schritt a1) erreicht ist,
oder
a2) Auswahl einer Mischtonfarbe (M) aus den Mischtonfarben mit den Koordinaten (0|100-v), wobei v ≠ 0 und 100 gilt, und
b2) Abmischen des Grundfarbtons (G) des Mischtonfarbraums mit der Unbuntfarbe Schwarz (S) bis die gewählte Mischtonfarbe (M) aus Schritt a2) erreicht ist,
oder
a3) Auswahl einer Mischtonfarbe (M) aus den Mischtonfarben mit den Koordinaten (100-u | 100-v), wobei u ≠ 100 und v ≠ 100 gilt,
b3) Abmischen der Unbuntfarbe Weiß (W) mit dem Grundfarbton (G) des Mischtonfarbraums bis die Mischtonfarbe mit der Koordinate (100-u |0) erreicht ist, und
c3) Abmischen der Mischtonfarbe aus Schritt b3) mit der Koordinate (100-u |0) mit der Unbuntfarbe Schwarz (S) bis die gewählte Mischtonfarbe (M) aus Schritt a3) erreicht ist.

2. Verfahren gemäß Anspruch 1, **dadurch gekennzeichnet, dass** die Anteile an (G), (W) und/oder (S) Gewichtsanteile oder Volumenanteile sind.

3. Verfahren gemäß Anspruch 1 oder 2, **dadurch gekennzeichnet, dass** die Achse X eine Anzahl von mindestens 3 Werten aufweist.

4. Verfahren gemäß einem der Ansprüche 1 bis 3, **dadurch gekennzeichnet, dass** die Achse Y eine Anzahl von mindestens 3 Werten aufweist.

5. Verfahren gemäß einem der Ansprüche 1 bis 4, **dadurch gekennzeichnet, dass** die Achse X eine angemessene Anzahl an Werten aufweist, die dem Verwendungszweck und dessen Umsetzung nicht entgegensteht.

6. Verfahren gemäß einem der Ansprüche 1 bis 5, **dadurch gekennzeichnet, dass** die Achse Y eine angemessene Anzahl an Werten aufweist, die dem Verwendungszweck und dessen Umsetzung nicht entgegensteht.

7. Verfahren gemäß einem der Ansprüche 1 bis 6, **dadurch gekennzeichnet, dass** der Grundfarbton (G) ein Buntton ist.

8. Verfahren gemäß einem der Ansprüche 1 bis 7, **dadurch gekennzeichnet, dass** der Grundfarbton (G) des Mischtonfarbraums, die Unbuntfarbe Weiß (W), die Unbuntfarbe Schwarz (S) und die Mischtonfarbe (M) in Form eines farbmittelbasierten Anstrichstoffs, Beschichtungsstoffs oder Lacks vorliegen.

9. Verfahren gemäß einem der Ansprüche 1 bis 8, **dadurch gekennzeichnet, dass** der Grundfarbton (G) des Mischtonfarbraums, die Unbuntfarbe Weiß (W), die Unbuntfarbe Schwarz (S) und die Mischtonfarben aus dem Mischtonfarbraum mittels eines Farbmessgeräts bestimmt werden.

10. Verfahren gemäß einem der Ansprüche 1 bis 9, **dadurch gekennzeichnet, dass** die Achse X ganzzahlige und/oder gebrochenzahlige Werte aufweist.

11. Verfahren gemäß einem der Ansprüche 1 bis 10, **dadurch gekennzeichnet, dass** die Achse Y ganzzahlige und/oder gebrochenzahlige Werte aufweist.

12. Verfahren gemäß einem der Ansprüche 1 bis 11, **dadurch gekennzeichnet, dass** die Achse X Werte aufweist, die
i) den gleichen Abstand oder
ii) einen ungleichen Abstand
haben.

13. Verfahren gemäß einem der Ansprüche 1 bis 11, **dadurch gekennzeichnet, dass** die Achse Y Werte aufweist, die
i) den gleichen Abstand oder
ii) einen ungleichen Abstand
haben.

14. Mischtonfarbraum zur Durchführung des Verfahrens nach Anspruch 1, umfassend einen Grundfarbton (G), die Unbuntfarbe Weiß (W), die Unbuntfarbe Schwarz (S) und Mischtonfarben aus dem Grundfarbton (G) des Mischtonfarbraums mit der Unbuntfarbe Weiß (W) und/oder der Unbuntfarbe Schwarz (S), **dadurch gekennzeichnet, dass** der Mischtonfarbraum durch ein zweidimensionales kartesisches Koordinatensystem mit den Achsen X und Y dargestellt ist, wobei die Achse X Werte im Bereich von 0 bis 100 und die Achse Y Werte im Bereich von 0 bis 100 aufweist, die Koordinate (0 |0) den Grundfarbton (G) des Mischtonfarbraums, die Koordinate (100|0) die Unbuntfarbe Weiß (W), die Koordinate (0|100) die Unbuntfarbe Schwarz (S) und die Koordinaten (100-u | 100-v) die Mischtonfarben aus dem Grundfarbton (G) des Mischtonfarbraums mit der Unbuntfarbe Weiß (W) und/oder der Unbuntfarbe Schwarz (S) darstellen, wobei u Werte im Bereich von größer 0 bis 100 und v Werte im Bereich von größer 0 bis 100 aufweist, wobei gilt, wenn u = 100, dann v ≠ 0 und 100 und wenn v = 100, dann u ≠ 0 und 100, und wobei
i) wenn v = 100 und u ≠ 100 gilt,
der Term (u*100)/100 dem prozentualen Anteil des Grundfarbtons (G) und
der Term ((100-u)*100)/100 dem prozentualen Anteil der Unbuntfarbe Weiß (W)
entspricht, bezogen auf die Summe der Anteile an (G) und (W), oder
ii) wenn u = 100 und v ≠ 100 gilt,
der Term (v*100)/100 dem prozentualen Anteil des Grundfarbtons (G) und
der Term ((100-v)*100)/100 dem prozentualen Anteil der Unbuntfarbe Schwarz (S)
entspricht, bezogen auf die Summe der Anteile an (G) und (S), oder
iii) wenn u ≠ 100 und v ≠ 100 gilt,
der Term (u*v/100) dem prozentualen Anteil des Grundfarbtons (G),
der Term ((100-u)*v/100) dem prozentualen Anteil der Unbuntfarbe Weiß (W) und
der Term (100-v) dem prozentualen Anteil der Unbuntfarbe Schwarz (S) entspricht, bezogen auf die Summe der Anteile an (G), (W) und (S).

15. Verwendung eines Mischtonfarbraums gemäß Anspruch 14 zur Auswahl einer Mischtonfarbe (M) zur Gestaltung von Oberflächen, vorzugsweise von Objektoberflächen, insbesondere von Objektoberflächen eines Innenraums und/oder einer Fassade.

## Claims

1. Method for producing a mixed colour (M) by mixing
a basic colour (G) with
the achromatic colour white (W) and/or
the achromatic colour black (S),
**characterized in that** the mixed colour (M) is selected from a mixed colour space and the mixed colour space is represented by a two-dimensional Cartesian coordinate system with the axes X and Y, where the axis X has values in the range from 0 to 100 and the axis Y has values in the range from 0 to 100, the coordinate (010) represents the basic colour (G) of the mixed colour space, the coordinate (100|0) represents the achromatic colour white (W), the coordinate (01100) represents the achromatic colour black (S) and the coordinates (100-u|100-v) represent the mixed colours from the basic colour (G) of the mixed colour space with the achromatic colour white (W) and/or the achromatic colour black (S), where u has values in the range from greater than 0 to 100 and v has values in the range from greater than 0 to 100, where, if u = 100, then v ≠ 0 and 100 and if v = 100, then u ≠ 0 and 100, and where
i) if v = 100 and u ≠ 100,
the term (u*100)/100) corresponds to the percentage proportion of the basic colour (G) and
the term ((100-u)*100)/100 corresponds to the percentage proportion of the achromatic colour white (W),
with respect to the sum of the proportions of (G) and (W), or
ii) if u = 100 and v ≠ 100,
the term (v*100)/100) corresponds to the percentage proportion of the basic colour (G) and
the term ((100-v)*100)/100 corresponds to the percentage proportion of the achromatic colour black (S),
with respect to the sum of the proportions of (G) and (S), or
iii) if u ≠ 100 and v ≠ 100,
the term (u*v100) corresponds to the percentage proportion of the basic colour (G), the term ((100-u)*v/100) corresponds to the percentage proportion of the achromatic colour white (W) and
the term (100-v) corresponds to the percentage proportion of the achromatic colour black (S),
with respect to the sum of the proportions of (G), (W) and (S),
comprising the steps of
a1) selecting a mixed colour (M) from the mixed colours with the coordinates (100-u|0), where u ≠ 0 and 100, and
b1) mixing the achromatic colour white (W) with the basic colour (G) of the mixed colour space until the selected mixed colour (M) from step a1) is achieved,
or
a2) selecting a mixed colour (M) from the mixed colours with the coordinates (0|100-v), where v ≠ 0 and 100, and
b2) mixing the basic colour (G) of the mixed colour space with the achromatic colour black (S) until the selected mixed colour (M) from step a2) is achieved,
or
a3) selecting a mixed colour (M) from the mixed colours with the coordinates (100-u|100-v), where u ≠ 100 and v ≠ 100,
b3) mixing the achromatic colour white (W) with the mixed colour (G) of the mixed colour space until the mixed colour with the coordinate (100-u|0) is achieved, and
c3) mixing the mixed colour from step b3) with the coordinate (100-u|0) with the achromatic colour black (S) until the selected mixed colour (M) from step a3) is achieved.

2. Method according to Claim 1, **characterized in that** the proportions of (G), (W) and/or (S) are proportions by weight or proportions by volume.

3. Method according to Claim 1 or 2, **characterized in that** the axis X has a number of at least 3 values.

4. Method according to one of Claims 1 to 3, **characterized in that** the axis Y has a number of at least 3 values.

5. Method according to one of Claims 1 to 4, **characterized in that** the axis X has an appropriate number of values that does not conflict with the intended use and its implementation.

6. Method according to one of Claims 1 to 5, **characterized in that** the axis Y has an appropriate number of values that does not conflict with the intended use and its implementation.

7. Method according to one of Claims 1 to 6, **characterized in that** the basic colour (G) is a chromatic colour.

8. Method according to one of Claims 1 to 7, **characterized in that** the basic colour (G) of the mixed colour space, the achromatic colour white (W), the achromatic colour black (S) and the mixed colour (M) take the form of a colourant-based paint, coating material or lacquer.

9. Method according to one of Claims 1 to 8, **characterized in that** the basic colour (G) of the mixed colour space, the achromatic colour white (W), the achromatic colour black (S) and the mixed colours are determined from the colour space by means of a colorimeter.

10. Method according to one of Claims 1 to 9, **characterized in that** the axis X has integral and/or fractional values.

11. Method according to one of Claims 1 to 10, **characterized in that** the axis Y has integral and/or fractional values.

12. Method according to one of Claims 1 to 11, **characterized in that** the axis X has values which
i) are at equal intervals or
ii) are at unequal intervals.

13. Method according to one of Claims 1 to 11, **characterized in that** the axis Y has values which
i) are at equal intervals or
ii) are at unequal intervals.

14. Mixed colour space for carrying out the method according to Claim 1, comprising a basic colour (G), the achromatic colour white (W), the achromatic colour black (S) and mixed colours from the basic colour (G) of the mixed colour space with the achromatic colour white (W) and/or the achromatic colour black (S), **characterized in that** the mixed colour space is represented by a two-dimensional Cartesian coordinate system with the axes X and Y, where the axis X has values in the range from 0 to 100 and the axis Y has values in the range from 0 to 100, the coordinate (010) represents the basic colour (G) of the mixed colour space, the coordinate (100|0) represents the achromatic colour white (W), the coordinate (0|100) represents the achromatic colour black (S) and the coordinates (100-u|100-v) represent the mixed colours from the basic colour (G) of the mixed colour space with the achromatic colour white (W) and/or the achromatic colour black (S), where u has values in the range from greater than 0 to 100 and v has values in the range from greater than 0 to 100, where, if u = 100, then v ≠ 0 and 100 and if v = 100, then u ≠ 0 and 100, and where
i) if v = 100 and u ≠ 100,
the term (u*100)/100) corresponds to the percentage proportion of the basic colour (G) and
the term ((100-u)*100)/100 corresponds to the percentage proportion of the achromatic colour white (W),
with respect to the sum of the proportions of (G) and (W), or
ii) if u = 100 and v ≠ 100,
the term (v*100)/100) corresponds to the percentage proportion of the basic colour (G) and
the term ((100-v)*100)/100 corresponds to the percentage proportion of the achromatic colour black (S),
with respect to the sum of the proportions of (G) and (S), or
iii) if u ≠ 100 and v ≠ 100,
the term (u*v100) corresponds to the percentage proportion of the basic colour (G), the term ((100-u)*v/100) corresponds to the percentage proportion of the achromatic colour white (W) and
the term (100-v) corresponds to the percentage proportion of the achromatic colour black (S),
with respect to the sum of the proportions of (G), (W) and (S).

15. Use of a mixed colour space according to Claim 14 for selecting a mixed colour (M) for designing surfaces, preferably object surfaces, in particular object surfaces of an interior space and or a facade.

## Revendications

1. Procédé de production d'une couleur mélangée (M) par mélange d'une teinte de base (G) à la couleur achromatique Blanc (W) et/ou la couleur achromatique Noir (S),
**caractérisé en ce que** la couleur mélangée (M) est sélectionnée dans un espace de couleurs mélangées et l'espace de couleurs mélangées est représenté par un système de coordonnées cartésiennes bidimensionnelles d'axes X et Y, l'axe X comportant des valeurs dans la gamme allant de 0 à 100 et l'axe Y comportant des valeurs dans la gamme allant de 0 à 100, la coordonnée (010) représentant la teinte de base (G) de l'espace de couleurs mélangées, la coordonnée (100|0) représentant la couleur achromatique Blanc (W), la coordonnée (0|100) représentant la couleur achromatique Noir (S) et les coordonnées (100-u|100-v) représentant les couleurs mélangées formées de la teinte de base (G) de l'espace de couleurs mélangées avec la couleur achromatique Blanc (W) et/ou la couleur achromatique Noir (S), u comportant des valeurs dans la gamme allant de plus de 0 à 100 et v comportant des valeurs dans la gamme allant de plus de 0 à 100, si u = 100 alors v ≠ 0 et 100 et si v = 100 alors u ≠ 0 et 100, et
i) si v = 100 et u ≠ 100,
le terme (u*100)/100 correspondant au pourcentage de la teinte de base (G) et
le terme ((100-u)*100)/100 correspondant au pourcentage de la couleur achromatique Blanc (W), rapporté à la somme des pourcentages de (G) et (W), ou
ii) si u = 100 et v ≠ 100,
le terme (v*100)/100 correspondant au pourcentage de la teinte de base (G) et
le terme ((100-v)*100)/100 correspondant au pourcentage de la couleur achromatique Noir (S), rapporté à la somme des pourcentages de (G) et (S), ou
iii) si u ≠ 100 et v ≠ 100,
le terme (u*v/100) correspondant au pourcentage de la couleur de base (G),
le terme ((100-u)*v/100) correspondant au pourcentage de la couleur achromatique Blanc (W) et
le terme (100-v) correspondant au pourcentage de la couleur achromatique Noir (S), rapporté à la somme des pourcentages de (G), (W) et (S),
le procédé comprenant les étapes suivantes
a1) sélectionner une couleur mélangée (M) parmi les couleurs mélangées ayant les coordonnées (100-u|0), avec u ≠ 0 et 100, et
b1) mélanger la couleur achromatique Blanc (W) à la teinte de base (G) de l'espace de couleurs mélangées jusqu'à obtenir la couleur mélangée (M) sélectionnée à l'étape a1),
ou
a2) sélectionner une couleur mélangée (M) parmi les couleurs mélangées ayant les coordonnées (0|100-v), avec v ≠ 0 et 100, et
b2) mélanger la teinte de base (G) de l'espace de couleurs mélangées à la couleur achromatique Noir (S) jusqu'à obtenir la couleur mélangée (M) sélectionnée à l'étape a2),
ou
a3) sélectionner une couleur mélangée (M) parmi les couleurs mélangées ayant les coordonnées (100-u|100-v), avec u ≠ 100 et v ≠ 100, et
b3) mélanger la couleur achromatique Blanc (W) à la teinte de base (G) de l'espace de couleurs mélangées jusqu'à obtenir la couleur mélangée ayant les coordonnées (100-u|0),
et
c3) mélanger la couleur mélangée de l'étape b3) ayant la coordonnée (100-u|0) à la couleur achromatique Noir (S) jusqu'à obtenir la couleur mélangée sélectionnée (M) de l'étape a3).

2. Procédé selon la revendication 1, **caractérisé en ce que** les pourcentages de (G), (W) et/ou (S) sont des pourcentages en poids ou des pourcentages en volume.

3. Procédé selon la revendication 1 ou 2, **caractérisé en ce que** l'axe X comporte un nombre d'au moins 3 valeurs.

4. Procédé selon l'une des revendications 1 à 3, **caractérisé en ce que** l'axe Y comporte un nombre d'au moins 3 valeurs.

5. Procédé selon l'une des revendications 1 à 4, **caractérisé en ce que** l'axe X comporte un nombre approprié de valeurs qui n'entrent pas en conflit avec l'utilisation envisagée et sa mise en œuvre.

6. Procédé selon l'une des revendications 1 à 5, **caractérisé en ce que** l'axe Y comporte un nombre approprié de valeurs qui n'entrent pas en conflit avec l'utilisation envisagée et sa mise en œuvre.

7. Procédé selon l'une des revendications 1 à 6, **caractérisé en ce que** la couleur de base (G) est une teinte bigarrée.

8. Procédé selon l'une des revendications 1 à 7, **caractérisé en ce que** la couleur de base (G) de l'espace de couleurs mélangés, la couleur achromatique Blanc (W), la couleur achromatique Noir (S) et la couleur mélangée (M) se présentent sous la forme d'une peinture, d'un matériau de revêtement ou d'un vernis à base de colorants.

9. Procédé selon l'une des revendications 1 à 8, **caractérisé en ce que** la teinte de base (G) de l'espace de couleurs mélangées, la couleur achromatique Blanc (W), la couleur achromatique Noir (S) et les couleurs mélangées de l'espace de couleurs mélangées sont déterminés au moyen d'un colorimètre.

10. Procédé selon l'une des revendications 1 à 9, **caractérisé en ce que** l'axe X comporte des valeurs entières et/ou fractionnaires.

11. Procédé selon l'une des revendications 1 à 10, **caractérisé en ce que** l'axe Y comporte des valeurs entières et/ou fractionnaires.

12. Procédé selon l'une des revendications 1 à 11, **caractérisé en ce que** l'axe X comporte des valeurs qui sont
i) à la même distance ou
ii)à des distances inégales.

13. Procédé selon l'une des revendications 1 à 11, **caractérisé en ce que** l'axe Y comporte des valeurs qui sont
i) à la même distance ou
ii)à des distances inégales.

14. Espace de couleurs mélangées destiné à la mise en œuvre du procédé selon la revendication 1 et comprenant une teinte de base (G), la couleur achromatique Blanc (W), la couleur achromatique Noir (S) et des couleurs mélangées formées de la teinte de base (G) de l'espace de couleurs mélangées avec la couleur achromatique Blanc (W) et/ou la couleur achromatique Noir (S), **caractérisé en ce que** l'espace de couleurs mélangées est représenté par un système de coordonnées cartésiennes bidimensionnelles d'axes X et Y, l'axe X comportant des valeurs dans la gamme allant de 0 à 100 et l'axe Y comportant des valeurs dans la gamme allant de 0 à 100, la coordonnée (010) représentant la teinte de base (G) de l'espace de couleurs mélangées, la coordonnée (100|0) représentant la couleur achromatique Blanc (W), la coordonnée (0|100) représentant la couleur achromatique Noir (S) et les coordonnées (100-u|100-v) représentant les couleurs mélangées formées de la teinte de base (G) de l'espace de couleurs mélangées avec la couleur achromatique Blanc (W) et/ou la couleur achromatique Noir (S), u comportant des valeurs dans la gamme allant de plus de 0 à 100 et v comportant des valeurs dans la gamme allant de plus de 0 à 100, si u = 100 alors v ≠ 0 et 100 et si v = 100 alors u ≠ 0 et 100, et
i) si v = 100 et u ≠ 100,
le terme (u*100)/100 correspondant au pourcentage de la teinte de base (G) et
le terme ((100-u)*100)/100 correspondant au pourcentage de la couleur achromatique Blanc (W), rapporté à la somme des pourcentages de (G) et (W), ou
ii) si u = 100 et v ≠ 100,
le terme (v*100)/100 correspondant au pourcentage de la teinte de base (G) et
le terme ((100-v)*100)/100 correspondant au pourcentage de la couleur achromatique Noir (S), rapporté à la somme des pourcentages de (G) et (S), ou
iii) si u ≠ 100 et v ≠ 100,
le terme (u*v/100) correspondant au pourcentage de la couleur de base (G),
le terme ((100-u)*v/100) correspondant au pourcentage de la couleur achromatique Blanc (W) et
le terme (100-v) correspondant au pourcentage de la couleur achromatique Noir (S), rapporté à la somme des pourcentages de (G), (W) et (S).

15. Utilisation d'un espace de couleurs mélangées selon la revendication 14 pour sélectionner une couleur mélangée (M) pour concevoir des surfaces, de préférence des surfaces d'objets, en particulier des surfaces d'objets d'un espace intérieur et/ou d'une façade.
